# EUROPEAN PATENT APPLICATION

(11) **EP 4 372 624 A1**
(43) Date of publication of application: **22.05.2024**
(21) Application number: 23196324.0
(22) Date of filing: 08.09.2023
(51) Int. Cl.: G06N 5/022, G06N 3/00, G06F 8/73

(54) **METHOD AND SYSTEM FOR ENABLING CONVERSATIONAL REVERSE ENGINEERING AND UNDERSTANDING OF A SOFTWARE APPLICATION**

(30) Priority: 16.11.2022 IN 202221065720
(71) Applicant: Tata Consultancy Services Limited, 400021 Mumbai, Maharashtra (IN)
(72) Inventor: RAVINDRANATH, Yogananda, 600119 Chennai, Tamil Nadu (IN); MEHALINGAM, Tamildurai, 600119 Chennai, Tamil Nadu (IN); BANERJEE, Shrayan, 700160 Kolkata, West Bengal (IN); KONDURU, Pranav Bhaskar, 600119 Chennai, Tamil Nadu (IN); SINGH, Shalini, 700160 Kolkata, West Bengal (IN); VENKATANARAYANAN, Balakrishnan, 600119 Chennai, Tamil Nadu (IN)
(74) Representative: Goddar, Heinz J.

(57) **Abstract**

Conversations with software applications have been an integral part of day-to-day activities. For a smooth conversations, it is necessary for a software to automatically help in understanding another software. A method and system for enabling conversational reverse engineering and understanding of software application has been provided. The present disclosure proposes a solutions which is configured to build a dynamic knowledge base for a bot to learn from an input application source code. The system and method are further configured to provide functional / domain context-based question interpretation and mapping of the information to the dynamically built knowledge base. A user query is converted to a proprietary question model. Further, a question verb, primary entity and secondary entity are extracted through natural language processing. A holistic architectural advancement is provided, which combines the analyzed information and in turn provides an end user with better understanding of the application in lesser time.

## Description

### CROSS-REFERENCE TO RELATED APPLICATIONS AND PRIORITY

The present application claims priority to Indian Patent Application No. 202221065720, filed on November 16, 2022

### TECHNICAL FIELD

The disclosure herein generally relates to the field of conversational reverse engineering involved in bots, and, more particularly, to a method and system for enabling conversational reverse engineering and understanding of a software application.

### BACKGROUND

An internet bot, web robot, robot or simply bot, is a software application that runs automated tasks over the internet, usually with the intent to imitate human activity on the internet, such as messaging or conversation. Conversations with software applications have been an integral part of our day-to-day activities. For a smooth conversations, it is necessary for a software to automatically help in understanding another software. While conversational experience in generating code are in evolving stages, a conversational analysis in application understanding is still an open area. Instead of the various reports and dashboards presented by the existing modernization enablers, conversational paradigm to application modernization is the need of the hour. For example, in a banking application in production, the responses to "How is the INTEREST amount calculated in this application?", "What is the purpose of variable A in program B?" and many such questions will ease the reverse engineering experience over all the existing processes and eventually replace them.

There are few generic bots available in the prior art which rely on a static knowledge repository for replying to user queries. Currently there is no system which can understand the legacy source application and act like a virtual contextual master who has the complete in-depth view of the application and can help the end user who wants to understand the application in a conversational manner.

### SUMMARY

Embodiments of the present disclosure present technological improvements as solutions to one or more of the above-mentioned technical problems recognized by the inventors in conventional systems. For example, in one embodiment, a system for enabling conversational reverse engineering and understanding of software application. The system comprises a user interface, one or more hardware processors, and a memory. The user interface receives a source code of the software application as an input. The memory is in communication with the one or more hardware processors, wherein the one or more first hardware processors are configured to execute programmed instructions stored the memory, the memory further configured to: extract technical knowledge from the source code using a parsing tool, wherein the technical knowledge comprises a plurality of structural information about a plurality of input and output interfaces present in the source code, a control flow information, a code syntax and information about dependency between a plurality of code components; extract functional and domain knowledge from the source code from a plurality of comments, code documentations and a plurality of variable names present in the source code using a self-supervised comment extraction model; extract information from a plurality of application specific external documents, wherein the plurality of application specific external documents is configured to create a holistic view and have a traceability; generate a plurality of question and answer pairs using the extracted information from the plurality of application specific external documents; combine the technical knowledge, the functional and domain knowledge and the generated plurality of question and answer pairs to form a knowledge base; receive a user query from a user; process the user query to identify a type of the query; and reply an answer to the user based on the identified user query using the knowledge base.

In another aspect, a method for enabling conversational reverse engineering and understanding of a software application. Initially, a source code of the software application is received, via a user interface, as an input. In the next step, technical knowledge is extracted from the source code using a parsing tool, wherein the technical knowledge comprises a plurality of structural information about a plurality of input and output interfaces present in the source code, a control flow information, a code syntax and information about dependency among a plurality of code components. Further, functional and domain knowledge is extracted from the source code, and a plurality of comments, code documentations and a plurality of variable names present in the source code using a self-supervised comment extraction model. In the next step, information from a plurality of application specific external documents is extracted, wherein the plurality of application specific external documents is configured to create a holistic view and have a traceability. Further, a plurality of question and answer pairs is generated using the extracted information from the plurality of application specific external documents. In the next step, the technical knowledge, the functional and domain knowledge and the generated plurality of question and answer pairs are then combined to form a knowledge base. In the next step, a user query is received from a user. The user query is then processed to identify a type of the query. And finally, an answer is replied to the user based on the identified user query using the knowledge base.

In yet another aspect, there are provided one or more non-transitory machine-readable information storage mediums comprising one or more instructions which when executed by one or more hardware processors cause enabling conversational reverse engineering and understanding of a software application. Initially, a source code of the software application is received, via a user interface, as an input. In the next step, technical knowledge is extracted from the source code using a parsing tool, wherein the technical knowledge comprises a plurality of structural information about a plurality of input and output interfaces present in the source code, a control flow information, a code syntax and information about dependency among a plurality of code components. Further, functional and domain knowledge is extracted from the source code, and a plurality of comments, code documentations and a plurality of variable names present in the source code using a self-supervised comment extraction model. In the next step, information from a plurality of application specific external documents is extracted, wherein the plurality of application specific external documents is configured to create a holistic view and have a traceability. Further, a plurality of question and answer pairs is generated using the extracted information from the plurality of application specific external documents. In the next step, the technical knowledge, the functional and domain knowledge and the generated plurality of question and answer pairs are then combined to form a knowledge base. In the next step, a user query is received from a user. The user query is then processed to identify a type of the query. And finally, an answer is replied to the user based on the identified user query using the knowledge base.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for enabling conversational reverse engineering and understanding of a software application according to some embodiments of the present disclosure.
FIG. 2 is a schematic block diagram of the system of FIG. 1 for enabling conversational reverse engineering and understanding of the software application according to some embodiments of the present disclosure.
FIG. 3 illustrates a schematic representation of a code based knowledge extraction module according to some embodiments of the present disclosure.
FIG. 4 illustrates a schematic representation of a term resolution module according to some embodiments of the present disclosure.
FIG. 5 illustrates a schematic representation of a question processing module according to some embodiments of the present disclosure.
FIG. 6 illustrates a schematic representation of a speech based input processing module according to some embodiments of the present disclosure.
FIG. 7 is a flowchart illustrating steps involved for enabling conversational reverse engineering and understanding of software application according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conversations with software applications have been an integral part of our day-to-day activities. For a smooth conversations, it is necessary for a software to automatically help in understanding another software. While conversational experience in generating code are in evolving stages, a conversational analysis in application understanding is still an open area. There are few generic bots available in the prior art which rely on a static knowledge repository for replying to user queries. Currently there is no system which can understand the legacy source application and act like a virtual contextual master who has the complete in-depth view of the application and can help the end user who wants to understand the application in a conversational manner.

There is a need of a virtual contextual master that can understand any input legacy application from any domain. The expectation of such virtual assistant is to have the complete in-depth view of the application and the ability to help the end user who wants to understand the application in a conversational manner. No reverse engineering system/product is enabled with conversational assistant that learns from the input application provided using machine learning techniques.

The present disclosure provides a method and system for enabling conversational reverse engineering and understanding of software application. The present disclosure proposes a solution which is configured to build a dynamic knowledge base for a bot to learn from an input application source code. The system and method are further configured to provide functional / domain context-based question interpretation and mapping of the information to the dynamically created knowledge base. The information from the application source code is analyzed and processed as dynamic knowledge that acts as a continuously growing repository for the bot.

The system is configured to convert a user query to a proprietary question model (PQM) or a base speech model. Further, a question verb, primary entity and secondary entity are extracted through natural language processing (NLP). A holistic architectural advancement is provided, which combines the information that is analyzed from code analysis tools and natural language elements and in turn provides the end user with better understanding of the application in lesser time.

According to an embodiment of the disclosure, the dynamic knowledge base is built only based on the corresponding software application. The disclosure is a combination of technical knowledge extraction from source code and functional/ domain-based knowledge extraction from comments, variable names powered by a preexisting solutions of unsupervised distribution agnostic clustering. It should be appreciated that in an example, the extraction of source code can be powered by TCS MasterCraftTM TransformPlus. The use any other technique is also well within the scope of this disclosure. The combination provides the holistic knowledge which is converted into defined questions and template-based responses. A natural language based mapping algorithm understands the user queries and provides the responses ensuring the conversational experience.

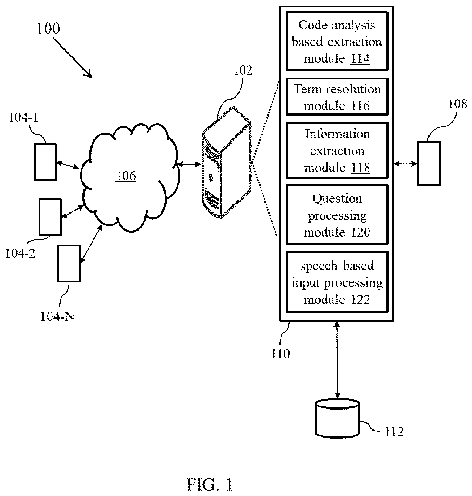

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method.

FIG. 1 illustrates a network diagram of a system 100 for enabling conversational reverse engineering and understanding of software application. Although the present disclosure is explained considering that the system 100 is implemented on a server, it may also be present elsewhere such as a local machine. It may be understood that the system 100 comprises one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation and the like. The I/O interface 104 are communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 may be implemented in a workstation, a mainframe computer, a server, and a network server. In an embodiment, the computing device 102 further comprises one or more hardware processors 108, one or more memory 110, hereinafter referred as a memory 110 and a data repository 112, for example, a repository 112. The data repository 112 may also be referred as a dynamic knowledge base 112 or a knowledge base 112. The memory 110 is in communication with the one or more hardware processors 108, wherein the one or more hardware processors 108 are configured to execute programmed instructions stored in the memory 110, to perform various functions as explained in the later part of the disclosure. The repository 112 may store data processed, received, and generated by the system 100. The memory 110 further comprises a plurality of modules. The plurality of modules is configured to perform various functions. The plurality of modules comprises a code analysis based extraction module 114, a term resolution module 116, an information extraction module 118, a question processing module 120, and a speech based input processing module 122.

The system 100 supports various connectivity options such as BLUETOOTH^{®}, USB, ZigBee and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. The components and functionalities of the system 100 are described further in detail.

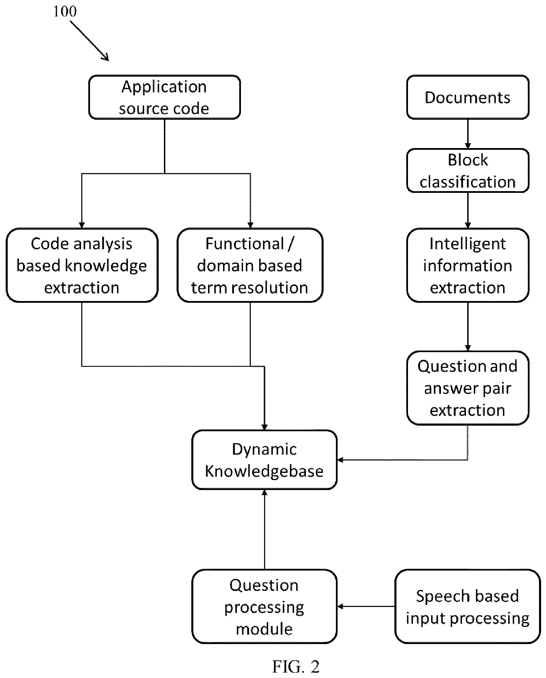

According to an embodiment of the disclosure, a schematic flowchart of the system 100 for enabling conversational reverse engineering and understanding of software application is shown in FIG. 2. The system 100 is configured to receive a source code of the software application as an input. The input here is not any document but the actual source code itself, which are generally analyzed by existing parsing / analysis tools.

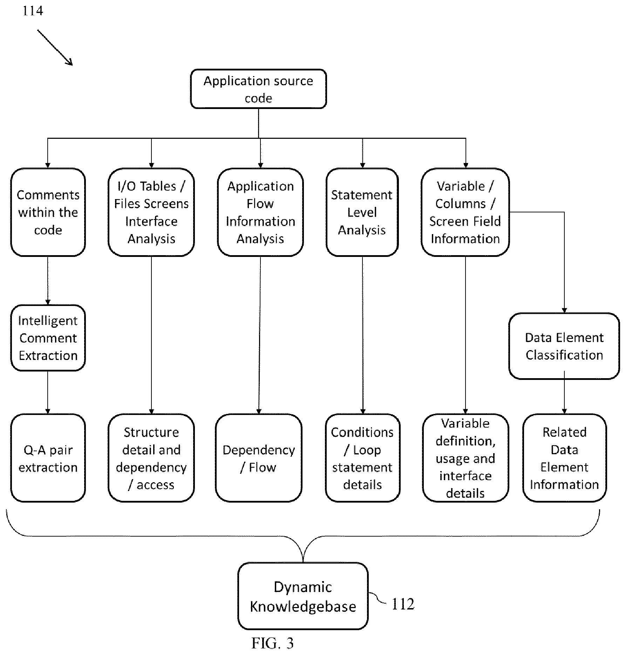

According to an embodiment of the disclosure, the system 100 comprises the code analysis based extraction module 114 as shown in the schematic representation of FIG. 3. The knowledge about the software application can be present in various forms. The code analysis based extraction tool 114 is configured to extract technical knowledge from the application source code using a parsing tool (not shown). The information about the application can be extracted in various ways. The technical knowledge comprises a plurality of structural information about a plurality of input and output interfaces present in the source code, a control flow information, a code syntax and information about dependency between a plurality of code components. The technical knowledge further comprises authentic code comments, or the variable names used in the source code, or statement relations etc.

As shown in FIG. 3, the application source code comprises a plurality of components such as comments, documentation within the source code etc. The comments and documentation within the code is used for intelligent comment extraction. The output of extraction is then become the part of the dynamic knowledge base 112. The application source code can also be used for various kind of analysis. For example:
- Input output tables or files screen interface analysis results in the generation of structural details and dependency or access of the application source code.
- Application flow information analysis of the application source code results in the dependency or flow of the application source code.
- Statement level analysis of the application source code results in the generation of the conditions or loop statement details present in the application source code.
- Variable / column / screen field information present in the application source code helps in getting details about the variable definitions, variable usage and variable interface. The variable / column / screen field information is also used for data element classification to get related data element information.

The output obtained from the above analysis contributes to the knowledge base 112.

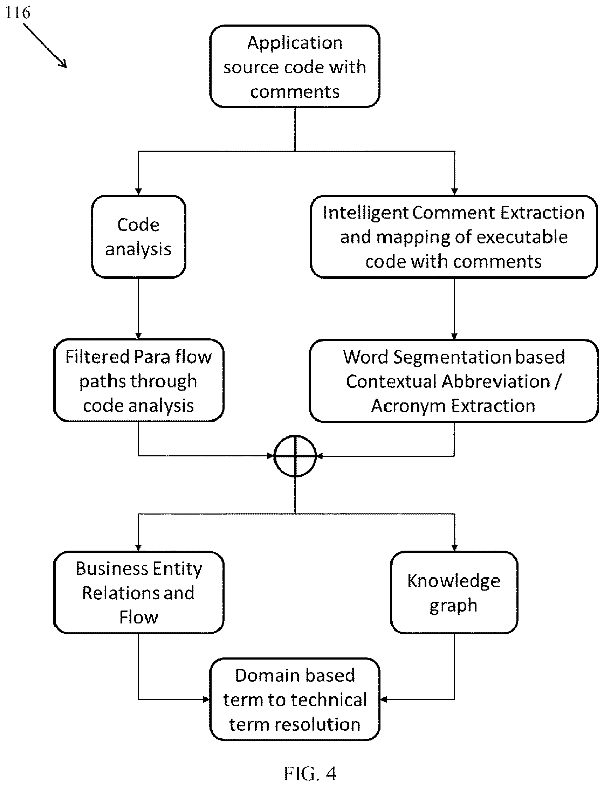

According to an embodiment of the disclosure, the system 100 comprises the term resolution module 116 as shown in the schematic representation of FIG. 4. Understanding the domain terminology and the nomenclature that is used in the code is very important to eliminate the domain dependency in this analysis and knowledge extraction. The term resolution module 116 is configured to extract functional and domain knowledge from the application source code from a plurality of comments, source code related documentation and a plurality of variable names present in the source code using a self-supervised comment extraction model. The domain-based terms that are specific to the application are extracted from the information available with the code, comments and their mapping. As shown in FIG. 4, the application source code normally contains the plurality of comments. The code analysis is performed on the application source code results in filtered para flow paths. Simultaneously, intelligent comment extraction and mapping of executable code with comments is performed, which results in word segmentation based contextual abbreviation / acronym extraction.

According to an embodiment of the disclosure, the system 100 comprises the information extraction module 118. The information extraction module 118 is configured to extract information from a plurality of application specific external documents. The plurality of application specific external documents comprises initial design documents, requirements docs to the manual for the application etc. The plurality of application specific external documents is configured to create a holistic view and have a traceability.

The holistic view created through the information extracted from code analysis and comment extraction aids in establishing the relations between identified business entity and its flow and a knowledge graph created with multiple relations like "is a", "has", "is type of', "expands to", "related to", "abbreviates to" (not limited to) results in the domain based term resolution.

For instance, the created knowledge graph would have a multi-level relation
- PM "expands to" "Policy Menu",
- 9999 "is a" "UM",
   i. "UM" "expands to "Uninsured Motorist" ,
   ii. "UM" "is type of" "Coverage"
and the like.

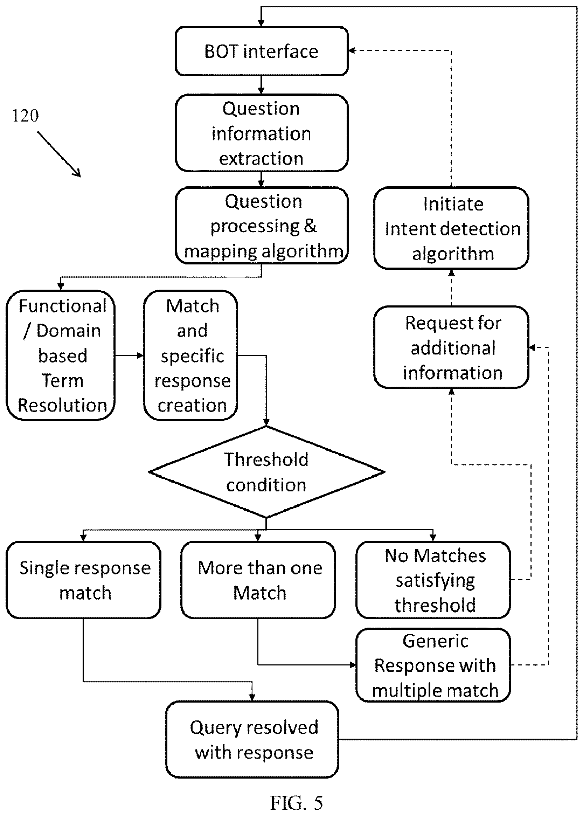

According to an embodiment of the disclosure, the system 100 comprises the question processing module 120 as shown in the schematic representation of FIG. 5. Once the information is available and extracted, the most important part is to understand the user query, process the query, map the query to get the correct response. The question processing module 120 is configured to generate a plurality of question and answer pairs using the extracted information from the plurality of application specific external documents. The plurality of question and answer pair ensures a conversational experience for the user. This can be a single step response (or) a set / sequence of user queries which will finally yield to the expected response that is configured to help the user. The question processing module 120 receives input from the bot interface in the form of the query / question. Further, information from the query is extracted. The question processing module 120 further comprises question processing and mapping algorithm. The question processing module 120 further resolves the query using match and response creation, by processing generic response and request for additional information, function and domain based term resolution and additional information and an intent detection algorithm. The question processing module 120 makes sure for the bot to return relevant answer for each question posed by the user. The question processing module 120 also configured to make sure the bot returns sorry messages when irrelevant questions are posed. The question processing module 120 works in three stages:
- Greetings check: It checks if the given question is some kind of greeting text, for example, if the user asks "Hello, Ikshana". The matching algorithm do not run across greeting texts to get matched with some variable like HELLO_STRING in the application. Rather, the question processing module 120 find greeting text and answer greetings before it goes into the matching algorithm.
- Matching algorithm: When a valid question is asked the bot goes through the question-answers table and returns the most relevant answer based on a score from an intelligent fuzzy algorithm. This is done in multiple stages.
   1. Exact Match: There can be times when simple questions like "What is INTEREST?" is already an exact match to the entry in the table. In such a case the answer of the entry is retrieved and sent as it is.
   2. Near Match with output: When the exact question is not present, the intelligent fuzzy algorithm returns a very high similarity score to the nearest match. This would be the highest compared to that of all the other entries. In such a case, the nearest match is considered as the relevant entry and is returned back to the user.
   3. Near Match with more than one outputs: When the exact question is not present, the intelligent fuzzy algorithm returns a very high similarity score for the nearest match. This would be the highest compared to that of all the other entries. Although there can be a case wherein the second highest and the highest score are very close. This signals that the model is not very sure onto whether it's the relevant answer. In such a case the algorithm returns the first match with a prompt "Did you mean {QUESTION}?". If said Yes, the loop stops. Else, it returns the second highest match to the entry. After two iterations if the user still says "No". Post this, the bot provides all the possible matches to the user with the highest score and allows the user to select from the list. If the user still says "No", The bot says "Sorry."

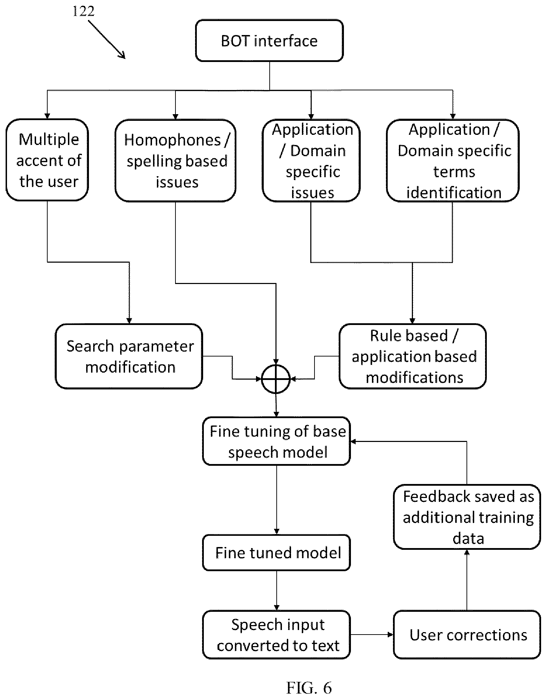

According to an embodiment of the disclosure, the system 100 comprises the speech based input processing module 122 as shown in the schematic representation of FIG. 6. The speech based input processing module 122 is configured to receive the user query and process the user query to identify a type of the query. The speech based input processing module 122 is basically used for speech to text processing. This is an external activity in the overall processing that makes the system 100 more user friendly. The process of addressing the general speech input based challenges, fine tuning, the architecture to continuously store the feedback that turns into a supervised text input for continuous learning and fine tuning of the model. As shown in the FIG. 6, the speech based input processing module 122 is configured to consider multiple accents of the user, homophones / spelling based issue, application / domain based issues, and application / domain specific terms identification. The speech parameters of the multiple accents of the user are modified. While, application / domain based issues, and application / domain specific terms identification are modified based on rules / application. Further, the modified speech parameters and modifications based on rules / application are used to generate a base speech model. The base speech model is then fine-tuned to generate a fine tuned model. The fine-tuned model is configured to convert the input speech in to text. Further, the user may also provide the correction to the text, these corrections are further taken as the feedback and given back as additional training data for the generation of the base speech model.

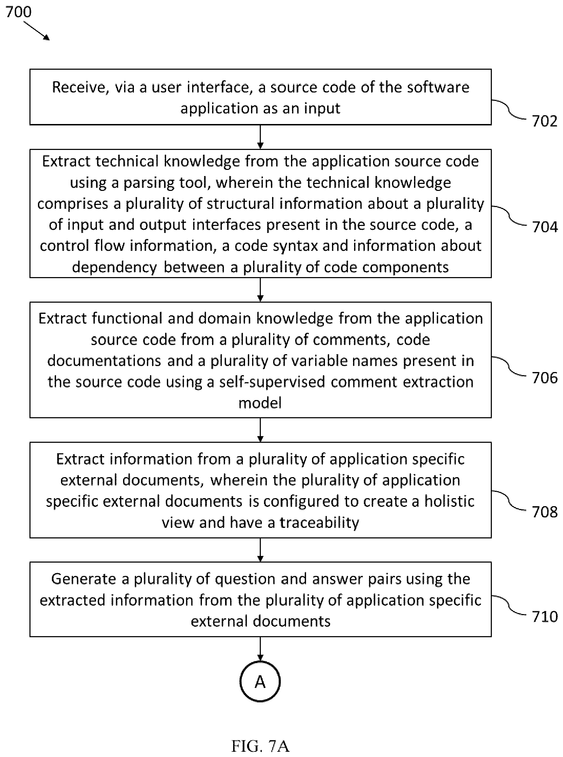

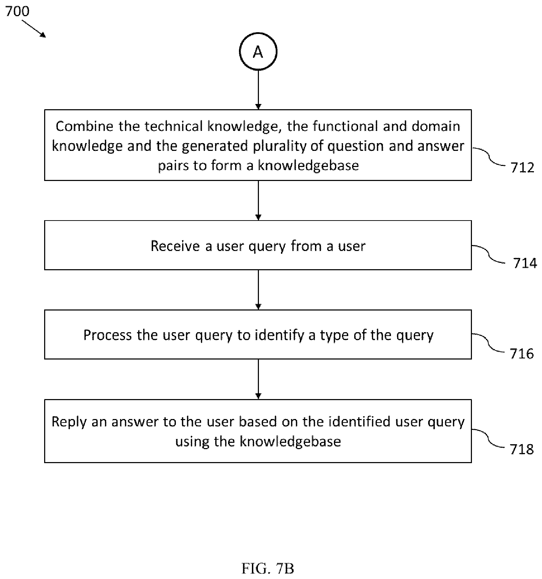

FIG. 7 illustrates an example flow chart of a method 700 for enabling conversational reverse engineering and understanding of software application, in accordance with an example embodiment of the present disclosure. The method 700 depicted in the flow chart may be executed by a system, for example, the system 100 of FIG. 1. In an example embodiment, the system 100 may be embodied in a computing device.

Operations of the flowchart, and combinations of operations in the flowchart, may be implemented by various means, such as hardware, firmware, processor, circuitry and/or other device associated with execution of software including one or more computer program instructions. For example, one or more of the procedures described in various embodiments may be embodied by computer program instructions. In an example embodiment, the computer program instructions, which embody the procedures, described in various embodiments may be stored by at least one memory device of a system and executed by at least one processor in the system. Any such computer program instructions may be loaded onto a computer or other programmable system (for example, hardware) to produce a machine, such that the resulting computer or other programmable system embody means for implementing the operations specified in the flowchart. It will be noted herein that the operations of the method 700 are described with help of system 100. However, the operations of the method 700 can be described and/or practiced by using any other system.

Initially at step 702 of the method 700, the source code of the software application is received as input, via the user interface. At step 704, technical knowledge from the application source code is extracted using the parsing tool. The use of any existing parsing tool is well within the scope of this disclosure. The technical knowledge comprises the plurality of structural information about the plurality of input and output interfaces present in the source code, the control flow information, the code syntax and information about dependency between a plurality of code components.

At step 706 of the method 700, functional and domain knowledge is extracted from the application source code from the plurality of comments, code documentations and the plurality of variable names present in the source code using a self-supervised comment extraction model. Further, at step 708, information is extracted from the plurality of application specific external documents. The plurality of application specific external documents is configured to create a holistic view and have a traceability.

At step 710 of the method 700, the plurality of question and answer pairs is generated using the extracted information from the plurality of application specific external documents. Further at step 712, the technical knowledge, the functional and domain knowledge and the generated plurality of question and answer pairs are combined to form the knowledge base 112.

At step 714 of the method 700, the user query is received from the user. At step 716, the user query is then processed to identify a type of the query. And finally, at step 718, an answer is replied to the user based on the identified user query using the knowledge base 112.

According to an embodiment of the disclosure, the system 100 is also provided with a translation Plugin: When the user gets an answer to the query asked, bot prompts to know if translating to native language /choice of language is required. If the answer is affirmative, bot displays the translated answer. The translation plugin improves the user friendliness of the bot.

According to an embodiment of the disclosure, the system 100 can also be explained with the help of following scenario. Let's assume a retail application which handles the placement of orders to vendors. A module in the retail application will have the information about the existing stocks / sale / the vendors / orders placed and the mapping between them to plan future orders that will have the inventory refilled. The vendor master table has the list of all the vendors, which in-turn might be named in the application as VNDMSTR. The existing reverse engineering solutions attempt to map between VNDMSTR and the corresponding name VENDOR MASTER through a mapping which is taken care by the subject matter expert or domain expert.

The bot of present disclosure receives the retail application as input, then based on the analysis on the input and the corresponding comments in the code, the bot will be able to provide responses to all the below queries. Based on the mapping of the information between the application source code and the natural language comments in the code, the bot analyzes to extract the mapping of VNDMSTR. The user is able to directly provide query to the bot using various queries such as: "which components of the application" or "which programs in the application accesses the VENDOR MASTER"? or "Give some information about Vendor Master."

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The disclosure herein addresses unresolved problem related conversational reverse engineering of the application source code. The embodiment thus provides the method and system for enabling conversational reverse engineering and understanding of software application.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs, GPUs etc.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (700) for enabling conversational reverse engineering and understanding of a software application, the method comprising:
receiving, via a user interface, a source code of the software application as an input (702);
extracting, via one or more hardware processors, technical knowledge from the source code using a parsing tool, wherein the technical knowledge comprises a plurality of structural information about a plurality of input and output interfaces present in the source code, a control flow information, a code syntax and information about dependency among a plurality of code components (704);
extracting, via the one or more hardware processors, functional and domain knowledge from the source code, and a plurality of comments, code documentations and a plurality of variable names present in the source code using a self-supervised comment extraction model (706);
extracting, via the one or more hardware processors, information from a plurality of application specific external documents, wherein the plurality of application specific external documents is configured to create a holistic view and have a traceability (708);
generating, via the one or more hardware processors, a plurality of question and answer pairs using the extracted information from the plurality of application specific external documents (710);
combining, via the one or more hardware processors, the technical knowledge, the functional and domain knowledge and the generated plurality of question and answer pairs to form a knowledge base (712);
receiving, via the one or more hardware processors, a user query from a user (714);
processing, via the one or more hardware processors, the user query to identify a type of the query (716); and
replying, via the one or more hardware processors, an answer to the user based on the identified user query using the knowledge base (718).

2. The processor implemented method of claim 1 further comprising:
receiving a speech query as the input;
processing a speech query into text; and
continuously storing feedback received from a user and turning the feedback into a supervised text input for continuous learning and fine tuning of the model.

3. The processor implemented method of claim 2, further comprising utilizing a language specific and an accent specific speech language model.

4. The processor implemented method of claim 1, wherein the plurality of question and answer pair ensures a conversational experience for the user.

5. The processor implemented method of claim 1, wherein extracting the functional and domain knowledge comprises generating a business entity relations flow and a knowledge graph.

6. The processor implemented method of claim 1, wherein the plurality of application specific external documents comprises one or more of initial design documents, requirements documents or a manual for the application.

7. The processor implemented method of claim 1, wherein processing the user query comprises:
match and responses creation,
generic response and request for an additional information,
functional and domain based term resolution,
seek for the additional information and initiate an intent detection algorithm, and
process the query based on an intelligent application navigation.

8. A system (100) for enabling conversational reverse engineering and understanding of software application, the system comprising:
a user interface (104) for receiving a source code of the software application as an input,
one or more hardware processors (108); and
a memory (110) in communication with the one or more hardware processors, wherein the one or more first hardware processors are configured to execute programmed instructions stored the memory, the memory further configured to:
extract technical knowledge from the source code using a parsing tool, wherein the technical knowledge comprises a plurality of structural information about a plurality of input and output interfaces present in the source code, a control flow information, a code syntax and information about dependency between a plurality of code components;
extract functional and domain knowledge from the source code from a plurality of comments, code documentations and a plurality of variable names present in the source code using a self-supervised comment extraction model;
extract information from a plurality of application specific external documents, wherein the plurality of application specific external documents is configured to create a holistic view and have a traceability;
generate a plurality of question and answer pairs using the extracted information from the plurality of application specific external documents;
combine the technical knowledge, the functional and domain knowledge and the generated plurality of question and answer pairs to form a knowledge base;
receive a user query from a user;
process the user query to identify a type of the query; and
reply an answer to the user based on the identified user query using the knowledge base.

9. One or more non-transitory machine-readable information storage mediums comprising one or more instructions which when executed by one or more hardware processors cause:
a processor implemented method for enabling conversational reverse engineering and understanding of a software application, the method comprising:
receiving, via a user interface, a source code of the software application as an input;
extracting, via one or more hardware processors, technical knowledge from the source code using a parsing tool, wherein the technical knowledge comprises a plurality of structural information about a plurality of input and output interfaces present in the source code, a control flow information, a code syntax and information about dependency among a plurality of code components;
extracting, via the one or more hardware processors, functional and domain knowledge from the source code, and a plurality of comments, code documentations and a plurality of variable names present in the source code using a self-supervised comment extraction model;
extracting, via the one or more hardware processors, information from a plurality of application specific external documents, wherein the plurality of application specific external documents is configured to create a holistic view and have a traceability;
generating, via the one or more hardware processors, a plurality of question and answer pairs using the extracted information from the plurality of application specific external documents;
combining, via the one or more hardware processors, the technical knowledge, the functional and domain knowledge and the generated plurality of question and answer pairs to form a knowledge base;
receiving, via the one or more hardware processors, a user query from a user;
processing, via the one or more hardware processors, the user query to identify a type of the query; and
replying, via the one or more hardware processors, an answer to the user based on the identified user query using the knowledge base.

10. The one or more non-transitory machine-readable information storage mediums of claim 9 further comprising
receiving a speech query as the input;
processing a speech query into text; and
continuously storing feedback received from a user and turning the feedback into a supervised text input for continuous learning and fine tuning of the model.

11. The one or more non-transitory machine-readable information storage mediums of claim 9 further comprising utilizing a language specific and an accent specific speech language model.

12. The one or more non-transitory machine-readable information storage mediums of claim 9, wherein the plurality of question and answer pair ensures a conversational experience for the user.

13. The one or more non-transitory machine-readable information storage mediums of claim 9, wherein extracting the functional and domain knowledge comprises generating a business entity relations flow and a knowledge graph.

14. The one or more non-transitory machine-readable information storage mediums of claim 9, wherein the plurality of application specific external documents comprises one or more of initial design documents, requirements documents or a manual for the application.

15. The one or more non-transitory machine-readable information storage mediums of claim 9, wherein processing the user query comprises:
match and responses creation,
generic response and request for an additional information,
functional and domain based term resolution,
seek for the additional information and initiate an intent detection algorithm, and
process the query based on an intelligent application navigation.
